# EUROPÄISCHE PATENTANMELDUNG

(11) **EP 3 505 468 A2**
(43) Veröffentlichungstag der Anmeldung: **03.07.2019**
(21) Anmeldenummer: 18209311.2
(22) Anmeldetag: 29.11.2018
(51) Int. Cl.: B65G 47/57, B65G 47/61, B65G 17/20, B65G 9/00

(54) **VORRICHTUNG ZUM BELADEN UND ENTLADEN VON SCHIENENGEFÜHRTEN HÄNGEFÖRDERSYSTEMEN**

(30) Priorität: 04.12.2017 CH 14702017
(71) Anmelder: FERAG AG, 8340 Hinwil (CH)
(72) Erfinder: GADLIGER, Urs, 8840 Einsiedeln (CH)
(74) Vertreter: IPrime Rentsch Kaelin AG

(57) **Zusammenfassung**

Eine Anlage zum Transferieren von Stückgut-Einheiten (2, 2', 2") zu und/oder von Fördereinheiten (60, 60") eines schienengeführten Hängefördersystems (80) umfasst mindestens eines Transferfördervorrichtung (10) mit einer oder mehreren ersten Fördereinheiten (30, 30', 30"), wobei die einzelnen ersten Fördereinheiten einen Rechen (31) aufweisen, mit einer Vielzahl von Zinken (34), welche eine Aufnahme (38) zur Lagerung einer Stückgut-Einheit bilden; und ein Hängefördersystem (80) mit einer Mehrzahl von zweiten Fördereinheiten (60, 60"), wobei die einzelnen zweiten Fördereinheiten einen Rechen (68) aufweisen, mit einer Vielzahl von Zinken (72), welche eine Aufnahme (62) zur Lagerung einer Stückgut-Einheit bilden. Die mindestens eine Transferfördervorrichtung und das mindestens eine Hängefördersystem sind derart ausgestaltet, dass in einer Transferzone (5) ein Rechen (31) einer ersten Fördereinheit der Transferfördervorrichtung und ein Rechen (68) einer zweiten Fördereinheit des Hängefördersystems sich kämmend durchdringen, so dass bei einer Bewegung der ersten und der zweiten Fördereinheit relativ zueinander entweder eine zuerst auf dem Rechen der ersten Fördereinheit gelagerte Stückgut-Einheit auf den Rechen der zweiten Fördereinheit liegen bleibt, oder eine zuerst auf dem Rechen der zweiten Fördereinheit gelagerte Stückgut-Einheit auf den Rechen der ersten Fördereinheit liegen bleibt.

## Beschreibung

### Technisches Gebiet

Die vorliegende Erfindung bezieht sich auf das Gebiet der Transport- und Fördertechnik. Sie betrifft eine Anlage zum Transferieren von Stückgut-Einheiten zu und/oder von Fördereinheiten eines schienengeführten Hängefördersystems. Sie betrifft weiter eine Fördereinheit für ein Hängefördersystem, und ein Verfahren zum Transferieren von Stückgut-Einheiten zu und/oder von Fördereinheiten eines Hängefördersystems.

### Technologischer Hintergrund

In automatisierten Warenlagern, weitläufigen Produktionsstätten und ganz allgemein bei der Förderung und dem Transport von Stückgütern haben sich schienengeführte Hängefördersysteme als ein effizientes Mittel für den Transport, die Zwischenpufferung, aber auch die langfristige Lagerung verschiedener Arten von Stückgütern erwiesen. Bei Hängefördersystemen werden die Stückgüter entweder auf geeignete Weise direkt an einzelnen Fördereinheiten eines Fördersystems aufgehängt, oder in entsprechende Aufnahmevorrichtungen eingebracht, die wiederum hängend an den Fördereinheiten gelagert sind.

Unter Stückgütern werden in diesem Zusammenhang allgemein einzeln transportierbare Einheiten verstanden, wie beispielsweise Werkstücke, Halbfabrikate und Fabrikate in Produktionsprozessen, Ersatzteile, Konsumgüter, Stapel von stapelbaren Gütern, beispielsweise Stapel von Druckerzeugnissen, aber auch Behältnisse und Transportträger für Waren, wie beispielsweise Kisten, Behälter, Gepäckstücke, Fässer, Pakete, Paletten, etc.

Schienengeführte Hängefördersysteme können als Kettenfördereranlagen realisiert sein, bei welchen eine Vielzahl von Fördereinheiten, welche Glieder einer Kette bilden, entlang eines Förderwegs bewegt wird.

Schienengeführte Hängefördersysteme mit einzeln förderbaren Transporteinheiten sind ebenfalls bekannt. So zeigt beispielsweise die WO 2016/030275 A1, auch publiziert als US 2018/215547 A1, ein schwerkraftgefördertes Fördersystem, bei welchen sich einzelne mit Rädern ausgestattete Fördereinheiten auf entsprechenden Laufschienen bewegen. Weichensysteme erlauben ein gezieltes Verteilen von einzelnen Fördereinheiten, die beispielsweise als Laufwagen ausgestaltet sein können, auf verschiedene Förderpfade, beziehungsweise das Zusammenführen von Fördereinheiten auf einen gemeinsamen Förderpfad. Staustrecken erlauben das Puffern oder Speichern mehrerer Laufwagen bei minimalem Abstand. Vereinzelungsanlagen wiederum erlauben die gezielte Freigabe gestauter Fördereinheiten. Auf abfallenden Förderstrecken können die Fördereinheiten energieeffizient mittels Schwerkraft gefördert werden. Auf horizontalen und ansteigenden Förderstrecken können die Fördereinheiten reversibel an Antriebsvorrichtungen wie beispielsweise Kettenantriebe oder Schneckenantriebe gekoppelt werden, um so Höhendifferenzen zu überwinden oder eine getaktete Förderung in einem bestimmten Bereich des Förderpfads zu erreichen.

Hängefördersysteme erlauben es, einen Grossteil des Fördersystems über Kopf an der Decke zu montieren, so dass die Grundfläche frei bleibt für Fertigungsanlagen und andere Einrichtungen. Für die Einspeicherung, Ausspeicherung oder Bearbeitung von Gütern muss der Förderpfad jedoch auf ein tieferes Niveau gebracht bzw. wieder nach oben geführt werden, was wegen der eingeschränkten Steigungswinkel von schienengeführten Hängefördersystemen einiges an Grundfläche und Raumvolumen benötigt, die anderweitig genutzt werden könnten.

Hängefördersysteme mit Transporteinheiten sind besonders geeignet für die effiziente Förderung von heterogenen Stückgütern. So können beispielsweise in Logistikzentren von Versandhandelsfirmen solche Hängefördersysteme verwendet werden, um eine Vielzahl von Artikeln verschiedener Grösse und Gewicht einzulagern, und Gruppen von Artikeln gemäss den jeweiligen Kundenaufträgen zu kommissionieren und für den Versand bereitzustellen. Ein anderer Anwendungsbereich ist die Förderung und Speicherung von Zwischenprodukten und/oder Endprodukten in Druckproduktionsprozessen.

Ein für ein Hängefördersystem relevanter Aspekt ist dabei das einfache, reibungslose und effiziente Einbringen von Stückgütern in leere Transporteinheiten und Entnehmen der Stückgüter aus dem Transporteinheiten, aber auch ein effizienter Transfer zwischen verschiedenen Fördersystemen, und ein geringer Bedarf an Raumvolumen und Grundfläche.

WO 2014/191162 A1 zeigt eine Anlage zur Sortierung von Gepäckstücken in einem Bandförderer-basierten Gepäcktransportsystem eines Flughafens. Die Sortieranlage umfasst eine kontinuierlich umlaufende Paternoster-Vorrichtung mit einer Vielzahl umlaufender Transporteinheiten, bestehend jeweils aus einem horizontalen Bandförder-Tisch. Ein zu sortierendes Gepäckstück wird auf einem Bandförderer der Sortiervorrichtung zugeführt, und über einen schwenkbaren Übergabe-Bandförderer an eine vorbeifahrende Transporteinheit übergeben. Während der Übergabe läuft der Bandförderer der entsprechenden Transporteinheit synchron zum Übergabe-Bandförderer. Nach erfolgter Übergabe wird der Bandförderer der Transporteinheit angehalten, und das Gepäckstück bewegt sich mit der Transporteinheit. Das Gepäckstück kann dann in analoger Weise an einen von mehreren Übernahme-Bandförderern abgegeben werden, womit eine Sortierung erreicht wird. Funktionell entspricht die Anlage einer Mehrfachweiche für Bandförderer mit mehreren möglichen Eingängen und Ausgängen.

WO 2012/155169 A1 und WO 2013/006879 A2 zeigen Regallagersysteme, bei welchen Lagerbehälter mit einer kontinuierlich umlaufenden Paternoster-Vorrichtung mit einer Vielzahl umlaufender Transporteinheiten in die gewünschte Ebene des Regallagers eingebracht und aus dieser entnommen werden können. Die Transporteinheiten bestehen aus jeweils einem konstant waagrecht gehaltenen Rechen mit drei bis vier Zinken, auf denen der Lagerbehälter während der Förderung aufliegt. Die Zinken des Rechens sind parallel oder senkrecht zur Umlaufebene der Paternoster-Vorrichtung ausgerichtet und bilden eine konstant waagrechte Ebene. Um einen Lagerbehälter von einem externen Bandförderer in eine Transporteinheit zu übernehmen, oder diesen von der Transporteinheit an einen externen Bandförderer abzugeben, ist eine Fördereinheit vorgesehen, die eine Mehrzahl von parallelen Riemenförderern oder einen Rollenförderer mit parallelen Rollen aufweist, die mit den Zinken der Transporteinheit kämmend wechselwirken. Bewegt sich eine beladene Transporteinheit von oben kämmend an der Fördereinheit vorbei, bleibt der Lagerbehälter auf der Fördereinheit liegen. Diese fördert anschliessend durch die Bandförderer bzw. Rollenförderer den Lagerbehälter auf einen externen Bandförderer. Ein Austausch von Lagerbehältern zwischen externen Bandförderern und Paternoster-Vorrichtung ist nur in den senkrecht verlaufenden Abschnitten des Förderpfades der Paternoster-Vorrichtung möglich. Damit mehrere externe Bandförderer bedient werden können, müssen die nicht benötigten Fördereinheiten aus dem Förderpfad weggeschwenkt werden.

DE 102013104423 A1 zeigt eine ähnliche Vorrichtung zum Transfer eines Stückgutes von einem ersten Bandförderer oder einem Fahrzeug auf einen darüberliegenden zweiten Bandförderer, bei welchem drei Transportschaufeln mit Rechenboden auf einem senkrechten Karussell konstant waagrecht ausgerichtet angeordnet sind. Eine kämmend mit dem waagrechten Rechenboden der Transportschaufeln wechselwirkende Fördereinheit übernimmt mit parallelen schmalen Bandförderern das Stückgut von einer von oben vorbeischwenkenden Transportschaufel und fördert es auf den externen Bandförderer. Die genannte Vorrichtung benötigt aufgrund ihrer Konstruktionsweise ein erhebliches Raumvolumen, verglichen mit der überwundenen Höhendifferenz.

Die oben genannten Vorrichtungen benötigen eine Vielzahl aufwendiger angetriebener bzw. bewegter Zuführ- und Abführvorrichtungen. Eine Übergabe der Stückgüter ist nur auf Bandförderer-basierte Fördersysteme oder Förderfahrzeuge möglich.

Es besteht allgemein das Bedürfnis nach Fortschritten in diesem Gebiet der Technik.

### Darstellung der Erfindung

Aufgabe der Erfindung ist es, eine Anlage zum Transferieren von Stückgut-Einheiten zu und/oder von Fördereinheiten eines schienengeführten Hängefördersystems zur Verfügung zu stellen, welche die oben erwähnten und andere Nachteile nicht aufweist. Insbesondere soll eine solche Anlage eine effiziente Übergabe von Stückgütern an schienengeführte Hängefördersysteme ermöglichen, bzw. eine effiziente Übernahme von Stückgütern aus schienengeführten Hängefördersystemen.

Eine weitere Aufgabe der Erfindung ist es, eine vorteilhafte Fördereinheit für ein Hängefördersystem zur Verfügung zu stellen, die insbesondere in einer erfindungsgemässen Anlage eingesetzt werden kann;

Noch eine andere Aufgabe der Erfindung ist es, ein vorteilhaftes Verfahren zum Transferieren von Stückgut-Einheiten zu und/oder von Fördereinheiten eines Hängefördersystems zur Verfügung zu stellen, welches eine effiziente Übergabe von Stückgütern an Hängefördersysteme ermöglichen, bzw. eine effiziente Übernahme von Stückgütern aus Hängefördersystemen ermöglicht.

Diese und andere Aufgaben werden gelöst durch eine erfindungsgemässe Anlage zum Transferieren von Stückgut-Einheiten zu und/oder von Fördereinheiten eines schienengeführten Hängefördersystems, eine erfindungsgemässe Fördereinheit für ein schienengeführtes Hängefördersystem, und ein Verfahren zum Transferieren von Stückgut-Einheiten zu und/oder von Fördereinheiten eines schienengeführten Hängefördersystems, gemäss den unabhängigen Ansprüchen. Weitere vorteilhafte Ausführungsformen sind in den abhängigen Ansprüchen gegeben.

Die erfindungsgemässe Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile wird im Folgenden eingegangen.

Ein erster Aspekt der Offenbarung betrifft eine Anlage zum Transferieren von Stückgut-Einheiten zu und/oder von Fördereinheiten eines schienengeführten Hängefördersystems, insbesondere eines einzelwagen-basierten Hängefördersystems oder eines Förderkettensystems.

Eine erfindungsgemässe Anlage zum Transferieren von Stückgut-Einheiten zu und/oder von Fördereinheiten eines schienengeführten Hängefördersystems umfasst mindestens eine Transferfördervorrichtung mit einer oder mehreren ersten Fördereinheiten, wobei die einzelnen ersten Fördereinheiten einen Rechen aufweisen, mit einer Vielzahl von Zinken, welche eine Aufnahme zur Lagerung einer Stückgut-Einheit bilden; und ein Hängefördersystem mit einer Mehrzahl von zweiten Fördereinheiten, wobei die einzelnen zweiten Fördereinheiten einen Rechen aufweisen, mit einer Vielzahl von Zinken, welche eine Aufnahme zur Lagerung einer Stückgut-Einheit bilden. Die mindestens eine Transferfördervorrichtung und das Hängefördersystem sind derart ausgestaltet, dass in einer Transferzone ein Rechen einer ersten Fördereinheit der Transferfördervorrichtung und ein Rechen einer zweiten Fördereinheit des Hängefördersystems sich kämmend durchdringen, so dass bei einer Bewegung der ersten und der zweiten Fördereinheit relativ zueinander entweder eine zuerst auf dem Rechen der ersten Fördereinheit gelagerte Stückgut-Einheit auf den Rechen der zweiten Fördereinheit liegen bleibt, oder eine zuerst auf dem Rechen der zweiten Fördereinheit gelagerte Stückgut-Einheit auf den Rechen der ersten Fördereinheit liegen bleibt.

Die Aufnahme der ersten Fördereinheiten und/oder die Aufnahme der zweiten Fördereinheiten kann als mindestens eine Wand oder als Mulde ausgestaltet sein.

Die Rechen der ersten Fördereinheiten können beispielsweise fünf einzelne Zinken aufweisen. Die Anzahl Zinken kann jedoch auch kleiner sein, minimal zwei, oder grösser, wobei sich die Anzahl aus der konkreten Dimensionierung der Anlage, beispielsweise der Breite der Fördereinheiten, aus den damit zusammenwirkenden Fördereinheiten eines Hängefördersystems, aber auch aus der Art der zu transportierenden Stückgut-Einheiten ergibt.

In einer erfindungsgemässen Anlage sind vorteilhaft die zweiten Fördereinheiten des Hängefördersystems einzeln förderbar, unabhängig von anderen zweiten Fördereinheiten.

Vorteilhaft bewegen sich in einer erfindungsgemässen Anlage die ersten Fördereinheiten entlang einem geschlossenen Förderpfad, wobei ein Abschnitt dieses Förderpfads der Transferzone entspricht.

Alternativ oder zusätzlich können sich die ersten Fördereinheiten auf einem Förderpfad zwischen der Transferzone und mindestens einer weiteren Zone bewegen.

In einer vorteilhaften Variante einer solchen erfindungsgemässen Anlage verläuft in der Transferzone der Förderpfad der ersten Fördereinheiten und der Förderpfad der zweiten Fördereinheiten in einer Ebene. Besonders vorteilhaft verläuft in der Transferzone der Förderpfad der ersten Fördereinheiten und der Förderpfad der zweiten Fördereinheiten in einer gemeinsamen Ebene.

In einer vorteilhaften Ausführungsform einer erfindungsgemässen Anlage weist die mindestens eine Transferfördervorrichtung Mittel auf, um die Ausrichtung des Rechens einer ersten Fördereinheit in Bezug zur Senkrechten zu verändern.

In einer anderen vorteilhaften Ausführungsform einer erfindungsgemässen Anlage weist die mindestens eine Transferfördervorrichtung Mittel auf, um die Ausrichtung des Rechens einer ersten Fördereinheit zu steuern. Besonders vorteilhaft wird dabei die Ausrichtung des Rechens in Abhängigkeit von der Lage der ersten Fördereinheit auf dem Förderpfad gesteuert.

In einer weiteren vorteilhaften Ausführungsform einer erfindungsgemässen Anlage sind die Zinken des Rechens einer ersten Fördereinheit auf einer Drehachse der ersten Fördereinheit verdrehsicher angeordnet; und die Transferfördervorrichtung weist zwei parallel geführte geschlossene Antriebsketten auf, auf welchen paarweise gegenüberliegend Drehlager angeordnet sind, in denen jeweils die Drehachse einer Fördereinheit drehbar gelagert ist. Besonders vorteilhaft weisen bei einer solchen Ausführungsform die ersten Fördereinheiten der mindestens einen Transferfördervorrichtung an einem oder beiden Enden der Drehachse einen mit der Drehachse wirkverbundenen Steuerhebel auf, welcher mit Steuermitteln der Transferfördervorrichtung wechselwirkt. Beispielsweise kann eine Kulissenführung oder ein Aktuator verwendet werden, um die Ausrichtung des Rechens der ersten Fördereinheiten zu steuern.

In der Transferzone wird der Rechen der ersten Fördereinheiten vorteilhaft so ausgerichtet, dass die Wände des Rechens parallel ausgerichtet sind zu den Wänden der zweiten Fördereinheiten des Hängefördersystems. In einem anderen Bereich des Förderpfads der Transferfördervorrichtung können die Rechen durch beispielsweise eine entsprechende Positionierung einer Führungskulisse so ausgerichtet sein, dass eine Wand waagrecht ausgerichtet ist, um so eine Stückgut-Einheit von einem waagrechten Bandförderer übernehmen oder an einen waagrechten Bandförderer übergeben zu können. Möglich ist auch eine aktive Steuerung der Ausrichtung der Rechen, indem beispielsweise Aktuatoren vorgesehen sind, welche eine Führungskulisse bei Bedarf verändern, beispielsweise durch Verschieben der Führungskulisse.

Das Hängefördersystem einer erfindungsgemässen Anlage kann Mittel aufweisen, um die Ausrichtung des Rechens einer zweiten Fördereinheit in Bezug zur Senkrechten zu verändern.

Das Hängefördersystem einer erfindungsgemässen Anlage kann weiter Mittel aufweisen, um die Ausrichtung des Rechens einer zweiten Fördereinheit zu steuern. Vorteilhaft erfolgt die Steuerung der Ausrichtung des Rechens in Abhängigkeit von der Lage der zweiten Fördereinheit auf dem Förderpfad.

In noch einer weiteren vorteilhaften Ausführungsform einer erfindungsgemässen Anlage weisen die zweiten Fördereinheiten des Hängefördersystems Mittel zum klemmenden Halten einer darin gelagerten Stückgut-Einheit auf. Besonders vorteilhaft weist das Hängefördersystem Mittel zum Verriegeln und Entriegeln der Mittel zum klemmenden Halten auf.

Das Hängefördersystem einer erfindungsgemässen Anlage kann Mittel aufweisen, welche in einer Transferzone des Förderpfads der zweiten Fördereinheiten die Ausrichtung der zweiten Fördereinheiten in Bezug auf den Förderpfad fixieren. Dies erlaubt während des Transfers der Stückgut-Einheit eine exakte Ausrichtung der beiden Fördereinheiten zueinander.

In einer vorteilhaften Variante einer erfindungsgemässen Anlage bilden die Zinken der Rechen der ersten Fördereinheiten und/oder die Zinken der Rechen der zweiten Fördereinheiten jeweils eine erste Wand und eine zweite Wand aus, die in einem Winkel < 180° zueinander stehen.

Der Winkel beträgt vorteilhaft 90° oder mehr, um ein Verklemmen von im Rechen gelagerten Stückgut-Einheiten zu vermeiden. Für Stückgüter mit speziellen Formgebungen, beispielsweise Kugeln oder Zylindern, können die Zinken so ausgestaltet sein, dass sich in Kombination eine nicht ebene Lagerfläche bildet, beispielsweise eine Mulde in der Form des zu transportierenden Stückgut-Typs, oder ein gerundeter Übergang zwischen den zwei Wänden.

Die Zinken der ersten Fördereinheiten und/oder der zweiten Fördereinheiten können beispielsweise als Metallelemente, beispielsweise Metallbleche, ausgebildet sein, womit sich die Lagerfläche des Rechens aus der Gesamtheit der Kanten ergibt. Es können auch zusätzliche flächige Elemente vorgesehen sein, beispielsweise Blechstreifen oder Kantenwülste, welche die Auflagefläche erhöhen. Die Zinken können auf der Seite der Lagerflächen eben sein, oder eine Struktur aufweisen, welche beispielsweise die Haftung erhöht. Ebenso kann die Haftreibung erniedrigt sein, beispielsweise durch Gleitflächen aus HDPE oder PTFE. Ebenfalls möglich ist die Anordnung von Rollen mit einer auf den Lagerflächen der Zinken. Die Zinken können auch selber als entlang einer Zinkenachse drehende Längsrollen ausgestaltet sein. Die vorgenannten Rollen können freidrehend und/oder angetrieben sein. Alternativ können die Zinken auch jeweils einen schmalen Riemenförderer umfassen.

Vorteilhaft ist die mindestens eine Transferfördervorrichtung so ausgestaltet, dass in mindestens einem Bereich der Förderpfade der ersten Fördereinheiten und der zweiten Fördereinheiten die erste Wand des Rechens einer ersten Fördereinheit parallel zur ersten Wand des Rechens einer zweiten Fördereinheit steht. Besonders vorteilhaft liegt der genannte mindestens eine Bereich der Förderpfade der ersten Fördereinheiten und der zweiten Fördereinheiten in einer Transferzone der erfindungsgemässen Anlage.

In einer erfindungsgemässen Anlage ist vorteilhaft die mindestens eine Transferfördervorrichtung so ausgestaltet, dass an mindestens einem Punkt des Förderpfads der ersten Fördereinheiten die erste Wand des Rechens einer ersten Fördereinheit waagrecht steht.

In einer vorteilhaften Ausführungsvariante einer erfindungsgemässen Anlage ist eine weitere Fördervorrichtung vorgesehen, die an einem der Transferfördervorrichtung zugewandten Ende aus mehreren parallel laufenden Riemenförderern oder einem Rollenförderer mit beabstandeten parallelen Rollen gebildet ist, die sich im Förderpfad der ersten Fördereinheit befinden, und mit den Rechen der ersten Fördereinheiten kämmend wechselwirken, so dass wenn eine erste Fördereinheit die weitere Fördervorrichtung passiert, der Rechen der ersten Fördereinheit die parallel laufenden Riemenförderer bzw. die beabstandeten parallelen Rollen des Rollenförderers der genannten weiteren Fördervorrichtung kämmend durchdringt.

Ein zweiter Aspekt der Offenbarung betrifft eine Transferfördervorrichtung zum vertikalen Transport von Stückgut-Einheiten zwischen einer ersten Zone und einer darunterliegenden mindestens einer zweiten Zone. Eine solche Transferfördervorrichtung kann vorteilhaft insbesondere in einer erfindungsgemässen Anlage, wie sie oben diskutiert worden ist, eingesetzt werden.

Eine solche vorteilhafte Transferfördervorrichtung zum vertikalen Transport von Stückgut-Einheiten zwischen einer ersten Zone und einer darunterliegenden mindestens einen zweiten Zone weist eine oder mehrere Fördereinheiten auf, wobei die einzelnen Fördereinheiten einen Rechen aufweisen, mit einer Vielzahl von Zinken, welche zur Lagerung einer Stückguteinheit mindestens erste Wand und eine zweite Wand ausbilden, die in einem Winkeln < 180° zueinander stehen, insbesondere einem rechten Winkel oder einem stumpfen Winkel.

Vorteilhaft bewegen sich bei einer solchen Transferfördervorrichtung die Fördereinheiten entlang einem geschlossenen Förderpfad, wobei bestimmte Abschnitte des Förderpfads den verschiedenen Zonen entsprechen.

Alternativ oder zusätzlich können sich die Fördereinheiten auf einem Förderpfad zwischen der ersten Zone und mindestens einer weiteren zweiten Zone bewegen.

In einer solchen Transferfördervorrichtung sind vorteilhaft Mittel vorgesehen, um die Ausrichtung des Rechens einer Fördereinheit in Bezug zur Senkrechten zu verändern.

Vorteilhaft können bei einer solchen Transferfördervorrichtung auch Mittel vorgesehen sein, um die Ausrichtung des Rechens einer Fördereinheit zu steuern, besonders vorteilhaft in Abhängigkeit von der Lage auf dem Förderpfad.

Die Zinken des Rechens einer Fördereinheit einer Transferfördervorrichtung sind vorteilhaft auf einer Drehachse der Fördereinheit verdrehsicher angeordnet; und die Vorrichtung weist zwei parallel geführte geschlossene Antriebsketten auf, auf welchen paarweise gegenüberliegend Drehlager angeordnet sind, in denen jeweils die Drehachse einer Fördereinheit drehbar gelagert ist.

Besonders vorteilhaft weisen dabei die Fördereinheiten an einem oder beiden Enden der Drehachse einen mit der Drehachse wirkverbundenen Steuerhebel auf, welcher mit Steuermitteln der Transferfördervorrichtung wechselwirkt, beispielsweise einer Kulissenführung oder einem Aktuator, um so die Ausrichtung des Rechens zu steuern.

Ein dritter Aspekt der Offenbarung betrifft eine Fördereinheit für ein schienengeführtes Hängefördersystem, insbesondere ein einzelwagen-basierten Hängefördersystems oder ein Förderkettensystem.

Eine erfindungsgemässe Fördereinheit für ein schienengeführtes Hängefördersystem umfasst eine Tragstruktur und einen Rechen zum Transport einer zu fördernden Stückgut-Einheit, umfassend eine Vielzahl von Zinken, welche eine Aufnahme zur Lagerung der zu fördernden Stückgut-Einheit ausbilden, wobei die Fördereinheit Mittel zum klemmenden Halten einer in der Aufnahme geförderten Stückgut-Einheit aufweist.

Die Aufnahme kann als mindestens eine ebene Wand ausgebildet sein, oder als Mulde.

In einer vorteilhaften Ausführungsform einer erfindungsgemässen Fördereinheit bilden die Zinken des Rechens eine erste Wand und eine zweite Wand aus, die in einem Winkel < 180° zueinander stehen, insbesondere einem rechten Winkel oder einem stumpfen Winkel.

Ein vierter Aspekt der Offenbarung betrifft Verfahren zum Transferieren von Stückgut-Einheiten zu und/oder von Fördereinheiten eines schienengeführten Hängefördersystems, insbesondere eines einzelwagen-basierten Hängefördersystems oder eines Förderkettensystems.

Ein erfindungsgemässes Verfahren zum Transferieren von Stückgut-Einheiten zu und/oder von Fördereinheiten eines schienengeführten Hängefördersystems umfasst die Schritte:
- Bereitstellen einer erfindungsgemässen Transferanlage wie obenstehend erläutert;
- Positionieren einer zweiten Fördereinheit des Hängefördersystems in einer Transferzone des Förderpfads der zweiten Fördereinheiten;
- Heranführen einer ersten Fördereinheit der Transferfördervorrichtung in eine Transferzone des Förderpfads der ersten Fördereinheiten; und
- kämmendes gegenseitiges Durchdringen des Rechens der ersten Fördereinheit und des Rechens der zweiten Fördereinheit;
wobei zum Transferieren einer auf dem Rechen der ersten Fördereinheit gelagerten Stückgut-Einheit auf den Rechen der zweiten Fördereinheit der Rechen der ersten Fördereinheit den Rechen der zweiten Fördereinheit in Gravitationsrichtung von oben nach unten durchdringt; beziehungsweise zum Transferieren einer auf dem Rechen der zweiten Fördereinheit gelagerten Stückgut-Einheit auf den Rechen der ersten Fördereinheit der Rechen der ersten Fördereinheit den Rechen der zweiten Fördereinheit entgegen der Gravitationsrichtung von unten nach oben durchdringt.

In einem erfindungsgemässen Verfahren wird vorteilhaft eine zweite Fördereinheit erst dann in die Transferzone und/oder aus der Transferzone gebracht, wenn sich die ersten Fördereinheiten in einer Position befinden, in welcher keine Kollision mit einer der zweiten Fördereinheiten des Hängefördersystems möglich ist.

In einer vorteilhaften Variante eines erfindungsgemässen Verfahrens bleiben die ersten Fördereinheiten der Transferfördervorrichtung nach der Übernahme einer Stückgut-Einheit von der zweiten Fördereinheit oder der Übergabe der Stückgut-Einheit an die zweite Fördereinheit in einer sicheren Position stehen, in welcher keine Kollision mit der genannten zweiten Fördereinheit möglich ist. Die genannte zweite Fördereinheit wird dann aus der Transferzone weggeführt.

In einer weiteren vorteilhaften Variante eines erfindungsgemässen Verfahrens bleiben die ersten Fördereinheiten der Transferfördervorrichtung vor dem Zuführen einer zweiten Fördereinheit in die Transferzone in einer sicheren Position stehen, in welcher keine Kollision mit der genannten zweiten Fördereinheit möglich ist.

In einer möglichen vorteilhaften Variante des erfindungsgemässen Verfahrens wird während des Transfers einer Stückgut-Einheit die zweite Fördereinheit in der Transferzone nicht bewegt. Die hat den Vorteil, dass durch vorübergehende räumliche Fixierung der zweiten Fördereinheit auf einfache und verlässliche Weise die präzise relative Orientierung der ersten Fördereinheit und der zweiten Fördereinheit während des Transfers erreicht werden kann.

In einer anderen möglichen vorteilhaften Variante des erfindungsgemässen Verfahrens bewegt sich während des Transfers einer Stückgut-Einheit auch die zweite Fördereinheit in Förderrichtung entlang ihres Förderpfads in der Transferzone. Eine solche Variante erlaubt schnellere Taktraten, da die zweiten Fördereinheiten nicht angehalten werden müssen. Um eine präzise relative Orientierung der ersten Fördereinheit und der zweiten Fördereinheit während des Transfers sicherzustellen, müssen die Bewegungen der beiden Fördereinheiten genau gesteuert werden, was höhere Anforderungen an die Steuerung stellt.

In einer besonders vorteilhaften Variante des vorgenannten erfindungsgemässen Verfahrens bewegen sich während des Transfers einer Stückgut-Einheit die zweite Fördereinheit und die erste Fördereinheit in einer gemeinsamen Förderrichtung, wobei die übernehmende Fördereinheit die übergebende Fördereinheit überholt. Eine solche Variante erlaubt einen Transfer bei höherer Fördergeschwindigkeit der zweiten Fördereinheiten, da die relativen Geschwindigkeitsunterschiede zwischen erster Fördereinheit und zweiter Fördereinheit gering sind.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands, die nicht dazu geeignet sind, die Erfindung auf die hierin offenbarten Merkmale zu beschränken. Für gleiche oder gleich wirkende Teile werden in den Figuren und der dazugehörigen Beschreibung gleiche oder ähnliche Bezugszeichen verwendet.
- Figur 1: zeigt eine perspektivische Darstellung der Transferzone einer möglichen Ausführungsform einer erfindungsgemässen Transferanlage.
- Figuren 2a, 2b: zeigen eine Ausführungsform einer Fördereinheit eines Hängefördersystems, zur Verwendung in einer erfindungsgemässen Transferanlage wie in Figur 1 gezeigt, (a) in Seitenansicht und (b) in perspektivischer Ansicht.
- Figur 3: zeigt die Transferzone des Hängefördersystems wie in Figur 1 gezeigt, in einer Sicht von unten.
- Figuren 4a-4i: zeigen schematisch den schrittweisen Ablauf der Übernahme einer Stückgut-Einheit von einem Hängefördersystem in einer erfindungsgemässen Transfer-Anlage, und die Abgabe an ein sekundäres Fördersystem.

### Ausführung der Erfindung

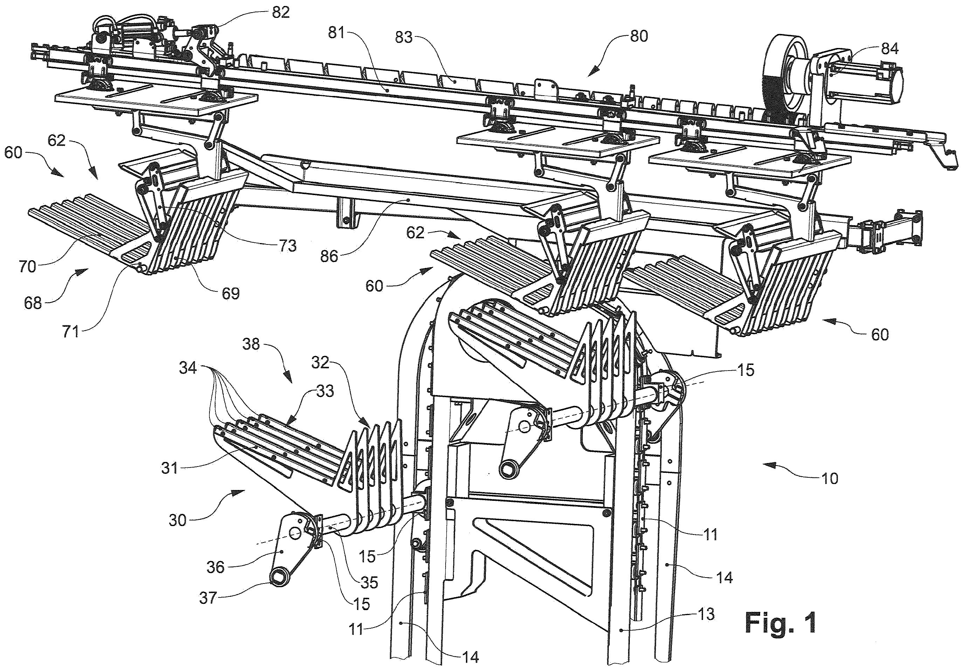

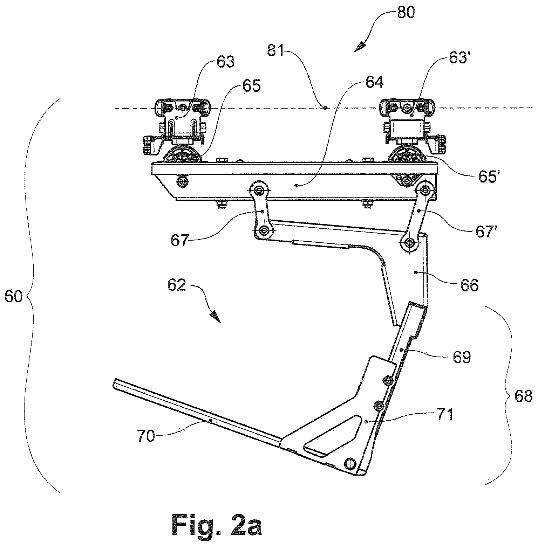

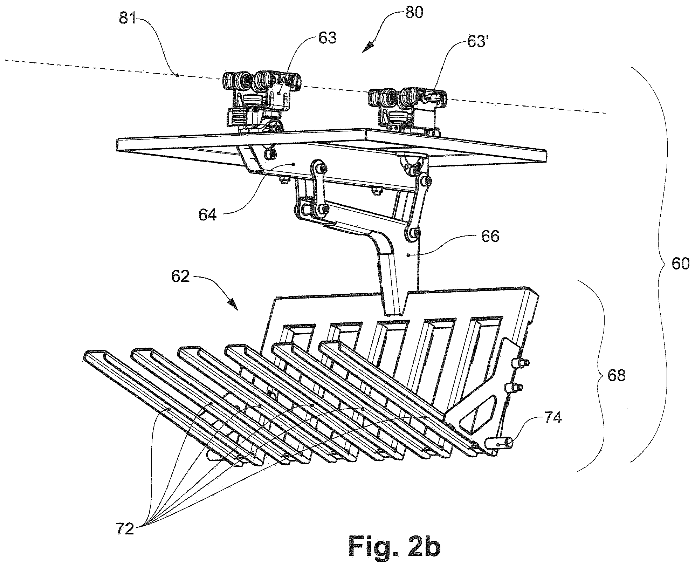

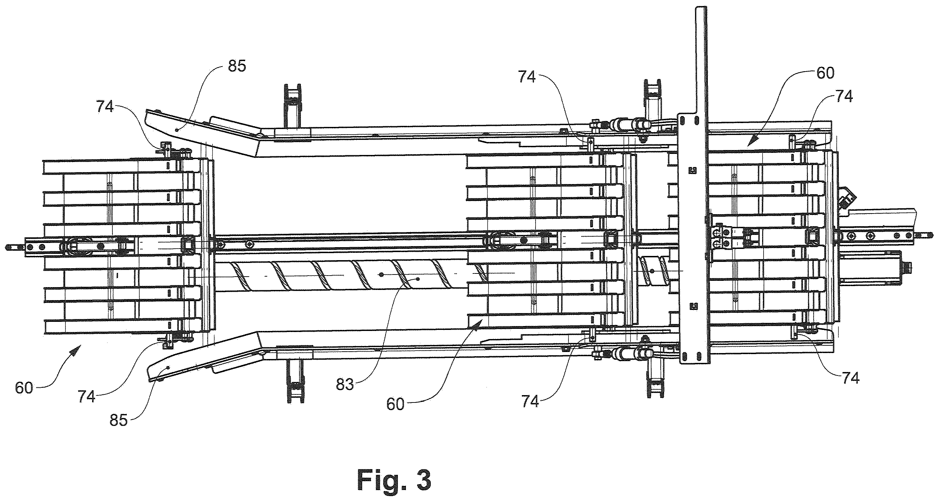

Ein vorteilhaftes Ausführungsbeispiel einer erfindungsgemässen Anlage zum Transferieren von Stückgut-Einheiten zu und/oder von Fördereinheiten eines Hängefördersystems ist in den Figuren 1 und 3 dargestellt. Der Aufbau der vorteilhaften Fördereinheiten des Hängefördersystems wird in den Figuren 2a und 2b gezeigt. Figur 1 zeigt dabei eine Teilansicht einer erfindungsgemässen Transferfördervorrichtung 10 zum vertikalen Transport von Stückgut-Einheiten, mit Fördereinheiten 30 der Transferfördervorrichtung, Sichtbar ist ein oberer Bereich der Transferfördervorrichtung, nämlich der Bereich in einer Transferzone 5, in welcher der Transfer von oder zu einem Hängefördersystem 80 stattfindet. Weiter ist ein Abschnitt eines Hängefördersystems 80 in der Transferzone 5 gezeigt. Für einen besseren Überblick ist eine vordere Hälfte der Transferfördervorrichtung 10 und des Hängefördersystems 80 in der Darstellung weggelassen. Figur 3 zeigt den Abschnitt des Hängefördersystems 80 mit Sicht von unten auf die Transferzone.

Die Transferfördervorrichtung 10 umfasst zwei parallele Antriebsketten 11 (davon ist eine sichtbar), welche auf einer Tragstruktur 13 auf entsprechenden Rädern und Rollen (nicht dargestellt) geschlossen umlaufend angeordnet sind, Ein Antrieb und eine Steuerung, nicht dargestellt, erlauben eine kontrollierte Bewegung der Fördereinheiten 30 in beide möglichen Förderrichtungen. Auf bestimmten Kettengliedern der beiden Antriebsketten 11 sind jeweils paarweise gegenüberliegend Drehlager 15 angebracht. In diesen Paaren von Drehlagern 15 ist jeweils eine Drehachse 35 einer Fördereinheit 30 drehbar gelagert. Auf der Drehachse 35 ist verdrehsicher der Rechen 31 der Fördereinheit 30 befestigt. Der Rechen 31 besteht aus einer Mehrzahl von einzelnen, im wesentlichen identischen Zinken 34, welche beabstandet voneinander auf der Drehachse 35 angeordnet sind. Die Zinken 34 sind gewinkelt, so dass sich in Kombination aller Zinken zwei ebene Wände 32, 33 ergeben, auf denen eine Stückgut-Einheit aufliegen bzw. anliegen kann. Die beiden Wände 32, 33 des Rechens 31 bilden einen rechten Winkel, was für im wesentlichen quaderförmige Stückgut-Einheiten vorteilhaft ist, aber auch für andere Formen von Stückgütern funktional ist.

Die Drehachse 35 der Fördereinheiten 30 ragt beidseitig über die beiden Drehlager 15 an der Antriebskette 11 hinaus. An den beiden Enden der Drehachse 35 ist jeweils ein Steuerhebel 36 angeordnet, mit einem Kulissenstein 37 in Form eines drehbar gelagerten Rads. Der Kulissenstein läuft in einer Kulisse bestehend aus zwei Führungsstrukturen, welche zwischen sich einen Führungskanal der Kulisse bilden, wobei in der Darstellung aufgrund des Blickwinkels nur eine äussere Führungsstruktur 14 der Kulissen sichtbar ist. Die Führungskulisse 14 erlaubt die Bestimmung der Ausrichtung des Rechens 31 in Bezug auf die Drehachse 35, und nimmt auch einen Teil der Gewichtskraft der Fördereinheiten und Ihres Inhalts auf. Im Ausführungsbeispiel der Figur 1 ist im dargestellten Bereich der Transferzone der Rechen 31 der Fördereinheiten 30 so ausgerichtet, dass die Wände 32, 33 parallel ausgerichtet sind zu den Wänden 69, 70 der Fördereinheiten 60 des Hängefördersystems 80.

Eine erfindungsgemässe Fördereinheit 60 des Hängefördersystems umfasst im gezeigten Ausführungsbeispiel zwei Laufwagen 63, 63', welche in der Laufschiene 81 des Hängefördersystems 80 laufen. Die beiden Laufwagen 63, 63' sind über erste Aufhängungen 65, 65' schwenkbar mit einer ersten Tragstruktur 64 verbunden. Über zweite Aufhängungen 67, 67' ist an der ersten Tragstruktur 64 schwenkbar eine zweite Tragstruktur 66 verbunden, welche wiederum den Rechen 68 trägt.

Der Rechen 68 besteht aus sechs Zinken 72 in Form von gewinkelten U-Profilen, die über eine Querstrebe mit der zweiten Tragstruktur 66 verbunden sind. Aus dem Winkel der Zinken 72 ergeben sich zwei Wände 69, 70 des Rechens 68. Seitlich sind zwei Seitenwände 71 angebracht, welche ein seitliches Herausrutschen der Ladung während des gegebenenfalls schnellen Transports einer Fördereinheit 60 im Hängefördersystem entlang eines kurvigen Förderpfads verhindern. Weiter dienen die Seitenwände 71 der Befestigung eines Führungsbolzens 74, auf den nachfolgend noch eingegangen wird. Ebenfalls an den Seitenwänden 71 befestigt ist eine Klemmvorrichtung 73, welche während dem Transport der Fördereinheit 60 im Hängefördersystem 80 die gelagerte Stückgut-Einheit von oben her fixiert. In den Figuren 2a und 2b sind dabei von der genannten Klemmvorrichtung 73 lediglich die zwei Drehbolzen der Aufhängung der schwenkbaren Klemmvorrichtung dargestellt.

Das Hängefördersystem 80 ist im gezeigten Ausführungsbeispiel als ein schwerkraftgefördertes Fördersystem mit einzeln fahrbaren Fördereinheiten 60 ausgestaltet. Von links kommend erreichen die auf einer Laufschiene 81 fahrenden Fördereinheiten 60 schwerkraftgetrieben die Transferzone der Anlage. Eine Vereinzelungsvorrichtung 82 übergibt eine Fördereinheit 60 an einen Schneckenantrieb 83 mit Motor 84, welche die Fördereinheit 60 an eine Transferposition bewegt und dort vorübergehend in Förderrichtung fixiert. Der Schneckenantrieb 83 weist vor und hinter der Transferposition zwei verschiedene Wendelsteigungen auf, so dass bei Austausch zweier Fördereinheiten 60 die neue zweite Fördereinheit 60 links von weiter her zugeführt wird, als sie rechts weggeführt wird. Auf diese Weise kann die Länge des Schneckenantriebs zwischen Vereinzelungsmechanismus 82 und Übergabe an das freilaufende Hängefördersystem minimiert werden.

Die Transferposition entspricht in der Darstellung der mittleren Fördereinheit 60. Eine Führungskulisse 85 führt zwei seitlich am Rechen der Fördereinheit 60 angebrachten Führungsbolzen 74, was in Kombination mit auf einen oberen Teil des Rechens 68 wirkenden Leitblechen 86 den Rechen 68 in seitlicher Richtung senkrecht zur Förderrichtung fixiert und eine exakte Ausrichtung der Zinken des Rechens 68 sicherstellt. Die Führungskulisse 85 steuert ausserdem den Neigungswinkel des schwenkbar aufhängt gelagerten Rechens 68, da sich die Ausrichtung des aufgehängt gelagerten Rechens aus der Distanz des Führungsbolzens 74 zur Laufschiene 81 ergibt.

Auf diese Weise kann erreicht werden, dass die Wände 69, 70 des Rechens 68 der Fördereinheit 60 des Hängefördersystems 80 und die Wände 32, 33, des Rechens 31 der Fördereinheit 30 der Transferfördervorrichtung 10 beim Transfer korrekt ausgerichtet sind, um ein Verschieben der transferierten Stückgut-Einheit zu vermeiden, und ein problemloses kämmendes Durchdringen der Rechen 31, 68 der beiden Fördereinheiten 30, 60 zu ermöglichen.

Soll eine Stückgut-Einheit von der Transferfördervorrichtung 10 an eine Fördereinheit 60 des Hängefördersystems 80 übergeben werden, so bewegen sich während der Übergabe die Fördereinheiten 30 der Transferfördervorrichtung 10 im Uhrzeigersinn. Die links dargestellte Fördereinheit 30 würde sich dabei mit einer auf dem Rechen 31 liegenden, an die Fördereinheit 60 zu übergebenden Stückgut-Einheit (nicht dargestellt) dem vorgegebenen Förderpfad folgend von links oben her der noch unbelegten, temporär fixierten mittleren Fördereinheit 60 nähern.

Der Rechen 31 der Fördereinheit 30 durchdringt dann den Rechen 68 der Fördereinheit 60, und zwar vorteilhaft so, dass im Moment der Übergabe die Zinken 34 des Rechens 31 und die Zinken 72 des Rechens 68 eine gemeinsame Lagerfläche bilden. Bewegt sich nun die Fördereinheit 30 weiter, bleibt die Stückgut-Einheit auf dem Rechen 68 der Fördereinheit 60 liegen. Die Übergabe der Stückgut-Einheit an das Hängefördersystem ist erfolgt.

Sobald die Fördereinheit 30 den Förderpfad des Hängefördersystems nach rechts verlassen hat, wird die nun beladene Fördereinheit 60 nach rechts weiterbewegt, und an den nachfolgenden Abschnitt des Förderpfads des Hängefördersystems übergeben.

Soll hingegen eine Stückgut-Einheit von einer Fördereinheit 60 des Hängefördersystems 80 an die Transferfördervorrichtung 10 übergeben werden, so bewegen sich während der Übergabe die Fördereinheiten 30 der Transferfördervorrichtung 10 im Gegenuhrzeigersinn. Die rechts dargestellte, noch unbelegte Fördereinheit 30 würde sich dabei dem vorgegebenen Förderpfad folgend von rechts unten her der fixierten mittleren Fördereinheit 60 nähern. Der Rechen 31 der Fördereinheit 30 durchdringt dann den Rechen 68 der Fördereinheit 60, und zwar wiederum vorteilhaft so, dass im Moment der Übergabe die Zinken 34 des Rechens 31 und die Zinken 72 des Rechens 68 eine gemeinsame Lagerfläche bilden. Bewegt sich nun die Fördereinheit 30 weiter, bleibt die zuvor auf dem Rechen 68 liegende Stückgut-Einheit auf dem Rechen 31 der Fördereinheit 30 liegen, und wird von dieser weggefördert. Die Übergabe der Stückgut-Einheit an die Transferfördervorrichtung 10 ist erfolgt.

Wenn der Rechen 31 eine Position erreicht hat, in welcher die Enden der Zinken des Rechens 68 nicht mehr mit der Stückgut-Einheit kollidieren können, also wenn der tiefste Punkt des Rechens 31 über dem Ende der Zinken des Rechens 68 steht, kann die nun beladene Fördereinheit 60 nach rechts weiterbewegt werden. Dabei muss sichergestellt sein, dass der Förderpfad des Hängefördersystems frei ist, was beispielsweise durch eine passende Wahl der Fördergeschwindigkeit der Transferfördervorrichtung 10 und des Abstands der aufeinanderfolgenden Fördereinheiten 30 erreicht werden kann.

Die schmalen seitlichen Dimensionen der Transferfördervorrichtung mit im Wesentlichen vertikaler Förderung der Stückgut-Einheiten und einem Transfer auf Höhe des Hängefördersystems führt zu einem wesentlich geringeren Bedarf an Grundfläche und Raumvolumen einer erfindungsgemässen Anlage, verglichen zum Stand der Technik, wo für die Beladung und Entladung von Fördereinheiten eines Hängefördersystems zuerst die Fördereinheiten auf ein anderes, tiefer liegendes Niveau geleitet werden müssen, um nach erfolgtem Ladungstransfer wieder nach oben gebracht zu werden. Aufgrund der beschränkt möglichen Steigungswinkel des Förderpfads eines Hängefördersystems wird dabei wesentlich mehr Grundfläche und Raumvolumen benötigt.

Die erfindungsgemässe Anlage erlaubt es weiter, mit der gleichen Anlage sowohl Stückgut-Einheiten in ein Hängefördersystem einzuspeisen, als auch Stückgut-Einheiten aus dem Hängefördersystem zu entnehmen, ohne konstruktive Anpassungen, lediglich durch eine Änderung der Förderrichtung und einer Umstellung der Steuerung der Antriebsmittel und Aktuatoren. Eine erfindungsgemässe Anlage kann so flexibler eingesetzt werden.

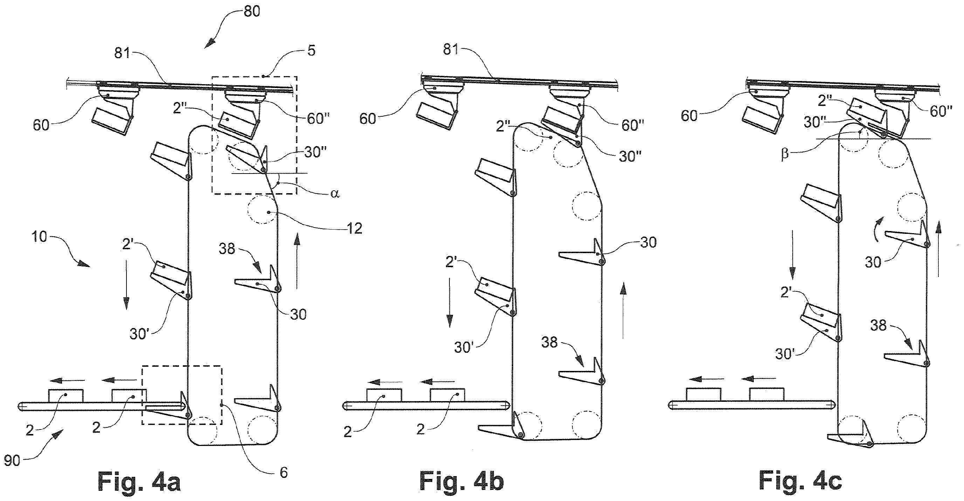

Die Funktionsweise einer erfindungsgemässen Anlage wird in den Figuren 4a bis 4i schrittweise erläutert, am Beispiel eines kontinuierlichen Transfers von Stückgut-Einheiten 2, 2', 2" von einem Hängefördersystem 80 auf eine Transferfördervorrichtung 10, und von dort auf eine weitere Fördervorrichtung 90. Die einzelnen Elemente sind dabei lediglich schematisch dargestellt.

Ein Anwendungsfall kann beispielsweise eine Produktionsanlage für Bücher sein, in welcher Bücher mit einer Minimalauflage von lediglich 1 mit schnellen Digitaldruckern gedruckt und als gefaltete Buchblöcke bereitgestellt werden, um anschliessend in weiteren Fertigungsschritten mit einem Umschlag versehen, zurechtgeschnitten, verpackt und versandt zu werden. Zur Vereinfachung des komplexen Logistikprozesses für die Produktion von vielen verschiedenen Produkten mit teilweise sehr kleinen Losgrössen ist es vorteilhaft, einzelne Bücherblöcke oder Stapel von identischen Bücherblöcken in ein Hängefördersystem zu überführen, und so zur Verarbeitungsanlage zu fördern, welche den nachfolgenden Produktionsschritt ausführen soll. Da das Hängefördersystem Pufferzonen beinhalten kann, können Druck und Nachbearbeitung entkoppelt werden, was eine Optimierung der einzelnen Produktionsschritte ohne Auswirkungen auf andere Produktionsschritte erlaubt, aber auch einen temporären Stillstand einzelner Verarbeitungsanlagen auffangen kann. Hängefördersysteme können auch Lagersubsysteme beinhalten, was eine weitere Optimierung der Leistung des Gesamtsystems erlaubt. Für die verschiedenen Produkte und Zwischenprodukte kann ein gemeinsames Hängefördersystem verwendet werden. So können beispielsweise Buchblöcke und fertige Bücher über das gleiche Hängefördersystem an den richtigen Zielort gefördert werden.

Figur 4a zeigt eine erste Phase eines Transfervorgangs. Eine umlaufende Förderkette umfasst mehrere erste Fördereinheiten, und wird durch Umlenkrollen 12 gestützt. Die zuvor von links in einer ersten Transferzone 5 an die Transferposition herangefahrene zweite Fördereinheit 60" des Hängefördersystems 80 ist mit einer Stückgut-Einheit 2" beladen, im oben genannten beispielhaften Anwendungsfall beispielsweise ein Stapel von mehreren Buchblöcken, der zuvor in das Hängefördersystem eingespiesen worden ist. Von rechts unten nähert sich eine erste Fördereinheit 30" der Transferfördervorrichtung 10 in einem steilen Winkel α.

Gleichzeitig bewegen sich stromabwärts zwei bereits belegte 2' erste Fördereinheiten 30' vertikal nach unten Richtung einer zweiten Transferzone 6, und auf einem Bandförderer 90 werden zwei Stückgut-Einheiten 2 nach links zur weiteren Verarbeitung wegbefördert, beispielsweise zu einer Maschine, welche die Buchblöcke mit einem Umschlag versieht.

Während der Übernahme von der zweiten Fördereinheit 60" und dem anschliessenden Transport abwärts zur zweiten Transferzone 6 sind die Rechen der ersten Fördereinheiten 30' 30" so ausgerichtet, dass die Stückgut-Einheiten im Winkel der beiden Wände des Rechens sicher gehalten werden.

Figur 4b zeigt eine zweite Phase eines erfindungsgemässen Transfervorgangs. Die erste Fördereinheit 30" hat die an der Transferposition fixierte zweite Fördereinheit 60" erreicht. Die Rechen der beiden Fördereinheiten durchdringen einander kämmend, und alle Zinken bilden eine gemeinsame Oberfläche, auf welcher die Stückgut-Einheit 2" aufliegt.

Figur 4c zeigt eine dritte Phase eines erfindungsgemässen Transfervorgangs. Die erste Fördereinheit 30" hat die Stückgut-Einheit 2" von der zweiten Fördereinheit 60" angehoben, und führt sie nach links weg. Um den Platzbedarf in der Höhe zu minimieren, wird dabei die erste Fördereinheit 30" parallel zu den Zinken der zweiten Fördereinheit 60" bewegt, mit einen Steigwinkel β, wobei β < α. Die erste Fördereinheit 30 nähert sich der ersten Transferzone 5, und beginnt sich aufgrund der Steuerkulisse (nicht dargestellt) aus der Horizontalen nach hinten zu neigen.

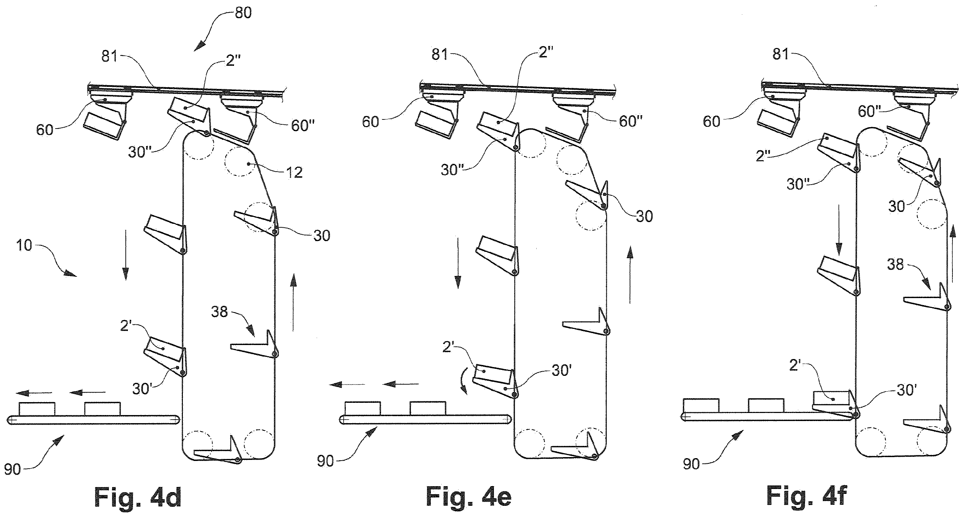

Figur 4d zeigt eine vierte Phase eines erfindungsgemässen Transfervorgangs. Die erste Fördereinheit 30" hat die Stückgut-Einheit 2" nun soweit angehoben, dass die zweite Fördereinheit 60" ungehindert nach rechts weggefördert werden könnte. Wird ein Schneckenantrieb wie in den Figuren 1 und 3 gezeigt verwendet, der zwei zweite Fördereinheiten gleichzeitig bewegen kann, bleibt die zweite Fördereinheit 60" vorläufig stehen, da der Förderpfad für die nächste zu entladende zweite Fördereinheit 60 noch nicht frei ist. Die erste Fördereinheit 30 hat den vorgesehenen Neigungswinkel für den Transfer erreicht.

Figur 4e zeigt eine fünfte Phase eines erfindungsgemässen Transfervorgangs. Die erste Fördereinheit 30" beginnt senkrecht in Richtung zweite Transferzone 6 abzusinken. Die erste Fördereinheit 30' erreicht derweil die zweite Transferzone 6. Wegen der entsprechend ausgestalteten Steuerkulisse (nicht dargestellt) beginnt sich der Rechen der ersten Fördereinheit 30' in Richtung der Horizontalen zu neigen.

Figur 4f zeigt eine sechste Phase eines erfindungsgemässen Transfervorgangs. Der Rechen der ersten Fördereinheit 30' ist nun waagrecht ausgerichtet, und durchdringt kämmend den aus mehreren parallelen Riemenförderern bestehenden Bandförderer 90. Bevor die Stückgut-Einheit 2' den Bandförderer 90 erreicht, wird der Bandförderer vorübergehend angehalten.

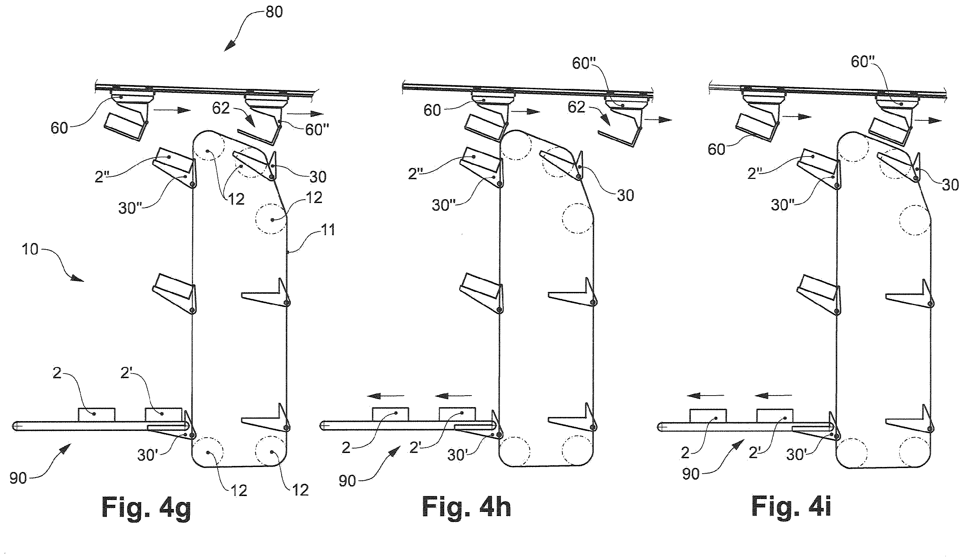

Figur 4g zeigt eine siebte Phase eines erfindungsgemässen Transfervorgangs. Die erste Fördereinheit 30" befindet sich nun so weit unten, dass der Förderpfad für die nächste zu entladende zweite Fördereinheit 60 frei ist. Diese wird nun in die erste Transferzone 5 hineinbewegt, und gleichzeitig wird die leere zweite Fördereinheit 60" aus der ersten Transferzone 5 herausbewegt. Um den Förderweg der zweiten Fördereinheiten 60, 60" freizuhalten, wird die Transferfördervorrichtung 10 vorübergehend angehalten. Der waagrechte Rechen der ersten Fördereinheit 30' hat der stillstehende Bandförderer 90 bereits kämmend durchdrungen und dabei die Stückgut-Einheit 2' auf dem waagrechten Bandförderer 90 abgelegt.

Figur 4h zeigt eine achte Phase eines erfindungsgemässen Transfervorgangs. Der Bandförderer 90 fährt mit der Förderung fort, und transportiert die abgelegte Stückgut-Einheit 2' aus der zweiten Transferzone 6. Die leere zweite Fördereinheit 60" hat die erste Transferzone 5 verlassen, und wird vom Hängefördersystem 80 einer neuen Verwendung zugeführt.

Figur 4i zeigt eine neunte Phase eines erfindungsgemässen Transfervorgangs. Die zweite Fördereinheit 60 hat die Transferposition erreicht und ist fixiert. Die Transferfördervorrichtung 10 läuft wieder an. Diese neunte Phase entspricht der ersten Phase aus Figur 4a. Der Transferzyklus ist abgeschlossen.

In den Phasen der Figuren 4g, 4h steht die Transferfördervorrichtung 10 still, während sie in den Phasen der Figuren 4a bis 4f läuft. Dies bedeutet jedoch nicht, dass die Födergeschwindigkeit dabei konstant sein muss. Vorteilhaft wird jeweils auf den Zeitpunkt eines Transfers die Fördergeschwindigkeit verringert, um eine sanftere Übernahme bzw. Übergabe einer Stückgut-Einheit zu erreichen, besonders vorteilhaft sinkt die Fördergeschwindigkeit im Moment des Transfers gegen Null.

Sollen Stückgut-Einheiten von einem Bandförderer 90 übernommen und in das Hängefördersystem eingespeist werden, laufen die Phasen in umgekehrter Reihenfolge ab. Die Förderrichtung der ersten Fördereinheiten der Transferfördervorrichtung 10 ist dabei umgekehrt (Gegenuhrzeigersinn im gezeigten Beispiel), während die Förderrichtung der zweiten Fördereinheiten gleich ist (von links nach rechts im gezeigten Beispiel). Eine vom Bandförderer 90 zugeführte Stückgut-Einheit 2', beispielsweise ein Stapel Buchblöcke aus einer Digitaldruckmaschine, liegt in der zweiten Transferzone 6 auf dem stillstehenden Bandförderer 90 zur Übernahme bereit (Figur 4g). Die erste Fördereinheit 30' durchdringt kämmend den Bandförderer 90 und übernimmt die Stückgut-Einheit 2' (Figur 4f). Der Rechen der ersten Fördereinheit 30' wird von der Horizontalen nach hinten geneigt (Figur 4e). Die erste Fördereinheit 30" hat die erste Transferzone 5 erreicht, und bewegt sich von links oben her auf die bereitstehende leere zweite Fördereinheit 60" zu (Figur 4d, 4c). Die erste Fördereinheit 30" hat die zweite Fördereinheit 60" erreicht, und die Rechen der beiden Fördereinheiten 30", 60" bilden eine gemeinsame Lagerfläche, auf der die Stückgut-Einheit 2" liegt (Figur 4b). Die erste Fördereinheit 30" hat die Stückgut-Einheit 2" auf der zweiten Fördereinheit 60" abgelegt, und ist soweit weiter gefördert, dass der Förderpfad für die nun belegte zweite Fördereinheit 60" und die nächste zu befüllende zweite Fördereinheit 60 frei ist (Figur 4a). Die Transferfördervorrichtung 10 wird angehalten (Figur 4a, 4i). Eine neue Stückgut-Einheit wird vom Bandförderer 90 in die zweite Transferzone 6 gefördert. Die belegte zweite Fördereinheit 60" wird aus der ersten Transferzone 5 wegbefördert, und eine zweite Fördereinheit 60 wird zugeführt (Figur 4h). Wenn das Stückgut-Einheit die Transferposition erreicht hat, wird der Bandförderer 90 angehalten (Figuren 4a, 4h). Die Transferfördervorrichtung 10 läuft wieder an. Der Transferzyklus beginnt von vorne (Figur 4g).

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. Anlage zum Transferieren von Stückgut-Einheiten (2, 2', 2") zu und/oder von Fördereinheiten (60, 60") eines schienengeführten Hängefördersystems (80), mit
mindestens einer Transferfördervorrichtung (10) mit einer oder mehreren ersten Fördereinheiten (30, 30', 30"), wobei die einzelnen ersten Fördereinheiten einen Rechen (31) aufweisen, mit einer Vielzahl von Zinken (34), welche eine Aufnahme (38) zur Lagerung einer Stückgut-Einheit bilden; und
einem Hängefördersystem (80) mit einer Mehrzahl von zweiten Fördereinheiten (60, 60"), wobei die einzelnen zweiten Fördereinheiten einen Rechen (68) aufweisen, mit einer Vielzahl von Zinken (72), welche eine Aufnahme (62) zur Lagerung einer Stückgut-Einheit bilden;
wobei die mindestens eine Transferfördervorrichtung und das Hängefördersystem derart ausgestaltet sind, dass in einer Transferzone (5) ein Rechen (31) einer ersten Fördereinheit der Transferfördervorrichtung und ein Rechen (68) einer zweiten Fördereinheit des Hängefördersystems sich kämmend durchdringen, so dass bei einer Bewegung der ersten Fördereinheit und der zweiten Fördereinheit relativ zueinander entweder eine zuerst auf dem Rechen der ersten Fördereinheit gelagerte Stückgut-Einheit auf den Rechen der zweiten Fördereinheit liegen bleibt, oder eine zuerst auf dem Rechen der zweiten Fördereinheit gelagerte Stückgut-Einheit auf den Rechen der ersten Fördereinheit liegen bleibt.

2. Anlage nach Anspruch 1, wobei die zweiten Fördereinheiten (60, 60") des Hängefördersystems (80) einzeln förderbar sind, unabhängig von anderen zweiten Fördereinheiten (60, 60").

3. Anlage nach Anspruch 1 oder 2, wobei sich die ersten Fördereinheiten (30, 30', 30") entlang einem geschlossenen Förderpfad bewegen, wobei ein Abschnitt dieses Förderpfads der Transferzone (5) entspricht.

4. Anlage nach einem der vorangegangenen Ansprüche, wobei sich die ersten Fördereinheiten (30, 30', 30") auf einem Förderpfad zwischen der Transferzone (5) und mindestens einer weiteren Zone bewegen.

5. Anlage nach einem der vorangehenden Ansprüche, wobei in der Transferzone (5) der Förderpfad der ersten Fördereinheiten (30, 30', 30") und der Förderpfad der zweiten Fördereinheiten (60, 60") in einer Ebene verlaufen.

6. Anlage nach einem der vorangehenden Ansprüche, wobei die mindestens eine Transferfördervorrichtung (10) Mittel (14, 15, 35, 36, 37) aufweist, um die Ausrichtung des Rechens (31) einer ersten Fördereinheit (30, 30', 30") in Bezug zur Senkrechten zu verändern.

7. Anlage nach einem der vorangehenden Ansprüche, wobei die mindestens eine Transferfördervorrichtung (10) Mittel (14, 15, 35, 36, 37) aufweist, um die Ausrichtung des Rechens (31) einer ersten Fördereinheit (30, 30', 30") zu steuern.

8. Anlage nach einem der vorangehenden Ansprüche, wobei die Zinken (34) des Rechens (31) einer ersten Fördereinheit (30, 30', 30") auf einer Drehachse (35) der ersten Fördereinheit verdrehsicher angeordnet sind; und die Transferfördervorrichtung (10) zwei parallel geführte geschlossene Antriebsketten (11) aufweist, auf welchen paarweise gegenüberliegend Drehlager (15) angeordnet sind, in denen jeweils die Drehachse (35) einer Fördereinheit (30) drehbar gelagert ist.

9. Anlage nach Anspruch 7, wobei die ersten Fördereinheiten (30, 30', 30") der mindestens einen Transferfördervorrichtung (10) an einem oder beiden Enden der Drehachse (35) einen mit der Drehachse wirkverbundenen Steuerhebel (36) aufweisen, welcher mit Steuermitteln (14) der Transferfördervorrichtung (10) wechselwirkt.

10. Anlage nach einem der vorangehenden Ansprüche, wobei das Hängefördersystem (80) Mittel aufweist um die Ausrichtung des Rechens (68) einer zweiten Fördereinheit (60, 60") in Bezug zur Senkrechten zu verändern, und/oder Mittel aufweist, um die Ausrichtung des Rechens (68) einer zweiten Fördereinheit (60, 60") zu steuern.

11. Anlage nach einem der vorangehenden Ansprüche, wobei die zweiten Fördereinheiten (60, 60") des Hängefördersystems (80) Mittel (70, 73) zum klemmenden Halten einer darin gelagerten Stückgut-Einheit (2) aufweisen.

12. Anlage nach Anspruch 10, wobei das Hängefördersystem (80) Mittel zum Verriegeln und Entriegeln der Mittel (70, 73) zum klemmenden Halten aufweist.

13. Anlage nach einem der vorangehenden Ansprüche, wobei das Hängefördersystem (80) Mittel (74, 85) aufweist, welche in einer Transferzone (5) des Förderpfads der zweiten Fördereinheiten (60, 60") die Ausrichtung der zweiten Fördereinheiten in Bezug auf den Förderpfad fixieren.

14. Anlage nach einem der vorangehenden Ansprüche, wobei die Zinken (34) der Rechen (31) der ersten Fördereinheiten (30, 30', 30") und/oder die Zinken (72) der Rechen (68) der zweiten Fördereinheiten (60, 60") jeweils eine erste Wand (32, 69) und eine zweite Wand (33, 70) ausbilden, die in einem Winkel < 180° zueinander stehen.

15. Anlage nach einem der vorangehenden Ansprüche, wobei die mindestens eine Transferfördervorrichtung (10) so ausgestaltet ist, dass in mindestens einem Bereich (5) der Förderpfade der ersten Fördereinheiten (30, 30', 30") und der zweiten Fördereinheiten (60, 60") die erste Wand (32) des Rechens (31) einer ersten Fördereinheit parallel zur ersten Wand (69) des Rechens (68) einer zweiten Fördereinheit (60, 60") steht.

16. Fördereinheit (60, 60") für ein schienengeführtes Hängefördersystem (80), mit einer Tragstruktur (64, 66, 67, 67) und einem Rechen (68) zum Transport einer zu fördernden Stückgut-Einheit, umfassend eine Vielzahl von Zinken (72), welche eine Aufnahme (62) zur Lagerung der zu fördernden Stückgut-Einheit ausbilden, wobei die Fördereinheit Mittel (70, 73) zum klemmenden Halten einer in der Aufnahme geförderten Stückgut-Einheit (2) aufweist.

17. Verfahren zum Transferieren von Stückgut-Einheiten (2, 2', 2") zu und/oder von Fördereinheiten (60, 60") eines schienengeführten Hängefördersystems (80), umfassend die Schritte:
- Bereitstellen einer Transferanlage nach einem der Ansprüche 1 bis 15;
- Positionieren einer zweiten Fördereinheit (60") des Hängefördersystems (80) in einer Transferzone (5) des Förderpfads der zweiten Fördereinheiten;
- Heranführen einer ersten Fördereinheit (30") der Transferfördervorrichtung (10) in eine Transferzone (5) des Förderpfads der ersten Fördereinheiten; und
- kämmendes gegenseitiges Durchdringen des Rechens (31) der ersten Fördereinheit und des Rechens (68) der zweiten Fördereinheit;
wobei zum Transferieren einer auf dem Rechen der ersten Fördereinheit gelagerten Stückgut-Einheit (2') auf den Rechen der zweiten Fördereinheit der Rechen der ersten Fördereinheit den Rechen der zweiten Fördereinheit in Gravitationsrichtung von oben nach unten durchdringt; beziehungsweise zum Transferieren einer auf dem Rechen der zweiten Fördereinheit gelagerten Stückgut-Einheit (2') auf den Rechen der ersten Fördereinheit der Rechen der ersten Fördereinheit den Rechen der zweiten Fördereinheit entgegen der Gravitationsrichtung von unten nach oben durchdringt.
